(19) Europäisches Patentamt
European Patent Office
Office européen des brevets

(11) **EP 4 773 240 A1**

(12) **EUROPEAN PATENT APPLICATION**
published in accordance with Art. 153(4) EPC

(43) Date of publication:
**08.07.2026 Bulletin 2026/28**

(21) Application number: **24884258.5**

(22) Date of filing: **10.09.2024**

(51) International Patent Classification (IPC):
*H01M 4/525* (2010.01)

(52) Cooperative Patent Classification (CPC):
**C01G 53/504; H01M 4/04; H01M 4/485;
H01M 4/505; H01M 4/525; H01M 4/62;
H01M 10/0525; Y02E 60/10**

(86) International application number:
**PCT/CN2024/118013**

(87) International publication number:
**WO 2025/092251 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.11.2023 CN 202311460557**

(71) Applicant: **Contemporary Amperex Technology
Co., Limited
Ningde, Fujian 352100 (CN)**

(72) Inventors:
• **LIN, Zehui
Ningde, Fujian 352100 (CN)**
• **NI, Huan
Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **POSITIVE ELECTRODE ACTIVE MATERIAL AND PREPARATION METHOD THEREFOR,
SECONDARY BATTERY, AND ELECTRIC DEVICE**

(57) Provided are a positive electrode active material and a preparation method therefor, a secondary battery, and an electric device. The positive electrode active material includes a particle containing lithium nickel cobalt manganese oxide. In a range of a distance L extending from the surface of the particle to the interior of the particle along the radial direction of the particle, the mass concentration of Co gradually increases from the interior of the particle to the surface of the particle along the radial direction of the particle, where L= 1 $\mu$m.

FIG. 2

EP 4 773 240 A1

**Description**

CROSS-REFERENCE TO RELATED APPLICATIONS

The present disclosure is filed based on, and claims priority to, Chinese Patent Application No. 202311460557.9, filed on November 3, 2023 and entitled "Positive Electrode Active Material and Preparation Method Therefor, Secondary Battery, and Electric Device", the entire content of which is hereby incorporated herein by reference.

TECHNICAL FIELD

The present disclosure relates to the technical field of lithium batteries, and in particular, to a positive electrode active material and a preparation method therefor, a secondary battery, and an electric device.

BACKGROUND

In recent years, as the application range of lithium ion batteries becomes wider, the lithium ion batteries are widely used in energy storage power systems such as hydraulic power stations, thermal power stations, wind power stations, and solar power stations, as well as a plurality of fields such as power tools, electric bicycles, electric motorcycles, electric vehicles, and aerospace. Due to great development of the lithium ion batteries, higher requirements are put forward for energy density, cycle performance, safety performance, and the like of the lithium ion batteries.

Low-nickel ternary positive electrode materials have the advantages of high thermal stability and excellent cycle performance. However, as market demands put forward more requirements on various performance of positive electrode materials, single crystal ternary positive electrode materials are required to have higher stability at high voltage and improved electrical performance.

SUMMARY

The present disclosure is made in view of the above problems, and an objective of the present disclosure is to provide a positive electrode active material to improve structural stability of a positive electrode active material particle and obtain improved power performance, so as to help alleviate problems of poor structural stability, poor dynamic performance, and poor cycle performance caused by a design of a large particle size. The present disclosure further provides a preparation method for a positive electrode active material, a secondary battery, and an electric device.

In order to achieve the above objective, a first aspect of the present disclosure provides a positive electrode active material, comprising a particle containing lithium nickel cobalt manganese oxide. In a range of a distance L extending from the surface of the particle to the interior of the particle along the radial direction of the particle, the mass concentration of Co gradually increases from the interior of the particle to the surface of the particle along the radial direction of the particle, wherein L= 1 $\mu$m.

In the positive electrode active material of the present disclosure, the content of Co in a region that is of the particle and that is close to the surface shows a gradient change, which greatly increases the content of Co on the surface of the particle and in a nearby region, and helps to increase the rate of transmitting conductive ions in a battery, thereby effectively improving structural stability of a surface layer of a positive electrode active material particle. In addition, when a voltage is at least 4.4 volts, cobalt can contribute to capacity, and when the content of cobalt on the surface of the particle is high, it is beneficial to exert the capacity of cobalt at high voltage. Therefore, a secondary battery prepared with the positive electrode active material can obtain improved power performance and cycle performance at high voltage. Therefore, the positive electrode active material in the present disclosure can effectively alleviate the problem of poor power performance caused by the design of large particle size of the particle. In addition, because the particle has an integrated structure, the particle has excellent overall stability.

Moreover, in the positive electrode active material of the present disclosure, because cobalt element is more concentratedly distributed on the surface of the particle and in the nearby region, the content of cobalt inside the particle can be reduced while the above effect is achieved, thereby reducing the content of Co in the positive electrode active material as a whole and reducing costs of the material.

In any implementation, L is 1.5 $\mu$m. In this way, Co element can be advantageously distributed in a region closer to the surface of the particle.

In any implementation, the mass concentration of Co on the surface of the particle is 1.02 times to 2 times, optionally 1.1 times to 1.8 times, of the mass concentration of Co at a distance L = 1 $\mu$m extending to the interior of the particle along the radial direction of the particle. Adjusting a rangeability of the content of Co in the region close to the surface of the particle helps improve capacity and electrical performance of the secondary battery prepared with the positive electrode active material. For example, in some embodiments, when the above ratio is larger, the material has a larger gram capacity and smaller initial DCR, and thus the secondary battery can have a relatively large capacity and a relatively small initial internal resistance value.

In any implementation, the mass concentration of Ni gradually decreases from the interior of the particle to the surface of the particle along the radial direction of the particle. When the content of Ni is relatively high, the tetravalent nickel on the surface of the particle has strong oxidizability, and is prone a side reaction with an electrolyte solution. Therefore, the lower content of nickel on and near the surface of the particle is more beneficial to stability of the surface of the particle.

In any implementation, an absolute value of a difference between the mass concentrations of Li and Mn at any two points in the particle is less than or equal to 20%. Therefore, when the difference between the mass concentrations of Li and Mn at any two points in the particle is less than or equal to 20%, it means that distribution uniformity of Li element and Mn element in the particle is high.

In any implementation, the positive electrode active material is represented by Formula 1:

$$Li_x(Ni_aCo_bMn_c)_dM_{1-d}O_{2-y}A_y \qquad \text{Formula 1}$$

wherein, $0.95 \leq x \leq 1.3$, $0.3 \leq a \leq 0.7$, $0.01 \leq b \leq 0.15$, $0.1 \leq c \leq 0.5$, $a + b + c = 1$, $0.95 \leq d \leq 1$, $0 \leq y \leq 0.1$, M comprises at least one selected from Zr, Sr, B, Ti, Mg, Sn, Tb, W, Nb, and Al, and A comprises at least one selected from S, N, F, Cl, Br, and I. By doping with M element, oxygen atoms can be effectively bound, and thus the positive electrode active material is not prone to release oxygen during high-temperature cycling and high-temperature storage, and structural stability of the positive electrode active material is significantly improved. Doping with A element can further improve structural stability of the positive electrode active material, and reduce side reactions on the surface of the particle, thereby further improving cycle performance of the battery.

In any implementation, the volume distribution particle size Dv50 of the particle is in a range of $3.5\ \mu m < Dv50 \leq 7.5\ \mu m$, optionally $4\ \mu m < Dv50 \leq 7\ \mu m$. When the volume distribution particle size of the particle is in the above range, due to a small particle size of the particle, it is beneficial for electron conductivity and ion transmission, thereby further reducing impedance of the secondary battery and improving power performance and dynamic performance.

In any implementation, the particle further has a coating layer, and optionally, the coating layer is an oxide or hydroxide of M', and M' comprises at least one selected from Mg, Al, Ca, Ba, Ti, Zr, Zn, Nb, Sb, Ce, La, W, and B. By coating and modifying the surface of the particle of the positive electrode active material, a particle material can be effectively protected, so that an interface of the particle is more stable, and a phase transition of a surface-layer structure can be effectively reduced. In addition, the surface of the positive electrode active material can be protected from being corroded by the electrolyte solution, thereby reducing side reactions, improving gas production resistance performance of the material, reducing a gas production amount of the battery, and improving cycle performance of the battery.

In any implementation, the thickness of the coating layer is $0.001\ \mu m$ to $0.5\ \mu m$, optionally $0.01\ \mu m$ to $0.1\ \mu m$. By controlling the thickness of the coating layer in the above range, contact between the electrolyte solution and a bulk particle can be effectively isolated, side reactions can be reduced, and lithium ions can have good diffusion and migration capabilities in the positive electrode active material.

A second aspect of the present disclosure further provides a preparation method for the positive electrode active material in the first aspect of the present disclosure, the preparation method comprising:

mixing a lithium source, a precursor of Ni, Co, and Mn, and optionally a compound containing a doping element M and a compound containing a doping element A, and performing first sintering, to obtain an initial material particle; and

mixing the initial material particle with a cobalt-containing compound, and performing second sintering, to obtain a particle containing lithium nickel cobalt manganese oxide.

In the preparation method for the positive electrode active material of the present disclosure, an initial material particle having a target composition is first prepared through first sintering, and then is second sintered together with a cobalt-containing compound, thereby obtaining a positive electrode active material, wherein in a range of a distance L = 1 $\mu m$ extending from the surface of the particle to the interior of the particle along the radial direction of the particle, the mass concentration of Co gradually decreases from the interior of the particle to the surface of the particle along the radial direction of the particle. In addition, the particle does not have a distinct core-shell construction. There is no distinct interface in which the mass concentration of the Co element (and other elements) in the particle changes abruptly. Instead, the particle is an integrated crystal particle, especially a single crystal particle.

In any implementation, the ratio of the mass of the cobalt-containing compound calculated as cobalt element to the mass of the particle containing the lithium nickel cobalt manganese oxide is in a range of 2000 ppm to 10000 ppm, optionally 4000 ppm to 7000 ppm. By controlling an addition amount of the cobalt-containing compound to be in the above range, it is helpful for the surface layer and the nearby region of the obtained particle material to have an ideal mass concentration of Co and a good concentration gradient, thereby implementing excellent performance of the foregoing positive electrode active material.

In any implementation, the molar ratio of Ni:Co:Mn in the precursor is in a range of (50-70):(6-25):(29-40), optionally (55-65):(6-12):(29-33). By controlling the value of the molar ratio of Ni:Co:Mn in the precursor to be in the above range, it is helpful to implement excellent performance of the foregoing positive electrode active material.

In any implementation, the temperature of the first sintering is kept for 5 h to 25 h at 600°C to 1000°C, optionally for 8 h to 20 h at 650°C to 950°C. After the first sintering, the obtained material through sintering is cooled to room temperature and then ground for 5 hours to obtain the initial material particle.

In any implementation, the second sintering is performed in an oxygen-rich atmosphere, and optionally the volume ratio of air to oxygen in the oxygen-rich atmosphere is between (0:10) and (8:2). By performing the second sintering in the oxygen-rich sintering atmosphere, it is helpful to inhibit Li/Ni mixing caused by low cobalt during sintering, which can prolong life of the material and help to increase cycle life of the secondary battery.

In any implementation, the temperature of the second sintering is kept for 5 h to 7 h at 650°C to 800°C. Through the second sintering, the cobalt-containing compound coated on the surface of the initial material particle and the initial material particle become an integrated particle. In addition, the content of Co shows a gradually decreasing trend in the radial direction from a surface layer to a certain depth inside the particle, thereby helping to obtain a positive electrode active material with high structural stability and good power performance.

In any implementation, the preparation method further comprises:
mixing the particle containing the lithium nickel cobalt manganese oxide with an M' source, and performing third sintering, to form a coating layer on the surface of the particle, wherein optionally, M' comprises at least one selected from Mg, Al, Ca, Ba, Ti, Zr, Zn, Nb, Sb, Ce, La, W, and B. An addition amount of a compound of the M' source is adjusted to be in the above range, so that the finally obtained coating layer can have the above appropriate thickness, thereby well isolating a particle body from the electrolyte solution, reducing positive electrode side reactions, and ensuring that the positive electrode active material has good lithium ion diffusion and migration capabilities.

A third aspect of the present disclosure further provides a secondary battery, comprising a positive electrode sheet. The positive electrode sheet comprises at least the positive electrode active material in the first aspect of the present disclosure, or the positive electrode sheet comprises at least the positive electrode active material prepared by using the method in the second aspect of the present disclosure.

A fourth aspect of the present disclosure further provides an electric device, comprising the secondary battery in the third aspect of the present disclosure.

BRIEF DESCRIPTION OF THE DRAWINGS

FIG. 1 is a schematic cross-sectional view of a lithium nickel cobalt manganese oxide particle 100 of a positive electrode active material according to an embodiment of the present disclosure;

FIG. 2 is an X-ray photoelectron spectroscopy (XPS) spectrum diagram of a positive electrode active material prepared in Example 1, Example 5, and Example 6 of the present disclosure;

FIG. 3 is a schematic diagram of a battery cell according to an embodiment of the present disclosure;

FIG. 4 is an exploded view of the battery cell shown in FIG. 3 according to an implementation of the present disclosure;

FIG. 5 is a schematic diagram of a battery module according to an implementation of the present disclosure;

FIG. 6 is a schematic diagram of a battery pack according to an implementation of the present disclosure;

FIG. 7 is an exploded view of the battery pack shown in FIG. 6 according to an implementation of the present disclosure; and

FIG. 8 is a schematic diagram of an electric device using a secondary battery as a power supply according to an implementation of the present disclosure.

Description of reference signs:
1. Battery pack; 2. Upper case; 3. Lower case; 4. Battery module; 5. Battery cell; 51. Housing; 52. Electrode assembly; and 53. Cap assembly.

DETAILED DESCRIPTION OF PREFERRED EMBODIMENTS

Embodiments specifically disclosing a positive electrode active material and a preparation method therefor, a secondary battery, and an electric device in the present disclosure will be described below in detail with appropriate reference to the accompanying drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. In addition, the accompanying drawings and the following descriptions are provided for those skilled in the art to fully understand the present disclosure, and are not intended to limit the subject matter described in the claims.

The "range" disclosed in the present disclosure may be defined in the form of a lower limit and an upper limit. A given range is limited by selecting a lower limit and an upper limit, which define boundaries of a special range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present disclosure, unless otherwise stated, a numerical range "a to b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer $\geq 2$, it is equivalent to disclosing that the parameter is an integer such as 2, 3, 4, 5, 6, 7, 8, 9, 10, 11, or 12.

Unless otherwise specified, all implementations and optional implementations of the present disclosure may be combined with each other to form new technical solutions.

Unless otherwise specified, all technical features and optional technical features of the present disclosure can be combined with each other to form new technical solutions.

Unless otherwise specified, all steps in the present disclosure may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Unless otherwise specified, the terms used in the present disclosure have the meanings commonly understood by those skilled in the art.

Unless otherwise specified, the numerical values of each parameter mentioned in the present disclosure may be measured by various test methods commonly used in the art, for example, they may be measured according to test methods provided in the embodiments of the present disclosure.

Unless otherwise specified, in the present disclosure, the term "active ion" refers to an ion that can be intercalated and deintercalated back and forth between a positive electrode and a negative electrode of a secondary battery, including but not limited to lithium ions.

A nickel-cobalt-manganese ternary positive electrode active material has excellent energy density and has a cost advantage over a lithium cobalt oxide material. The three elements, nickel, cobalt and manganese in the material can be mixed at any ratio. Mn mainly exists in a form of +4 valence, which can improve structural stability of the material and improve safety of the battery, but does not participate in an electrochemical process. Ni mainly exists in a form of +2 valence, and $Ni^{2+}$ is oxidized to $Ni^{3+}$ and $Ni^{4+}$ during deintercalation and insertion of lithium; and Co mainly exists in a form of +3 valence, and $Co^{3+}$ is oxidized to $Co^{4+}$ during deintercalation and insertion of lithium. Both Ni and Co can contribute to capacity. Due to large reserves and a relatively low price of nickel, it is a mainstream trend to increase the content of nickel in the material to increase the gram capacity of the material. However, divalent nickel and lithium ions are prone to mixing, and as the number of charging and discharging cycles increases, mixing is intensified, which ultimately leads to material structural instability and affects cycle life of the secondary battery. In addition, a +4 valent nickel on the surface of the material is prone to side reactions with an electrolyte solution, which also leads to a decrease in stability of the material. Cobalt helps to stabilize a layered structure of the material and prevent mixing of nickel and lithium, which is beneficial to cycle performance and rate performance of the battery. However, cobalt is relatively expensive, and an increase in the content of cobalt increases costs of the material.

A ternary positive electrode active material with a large particle size has been designed to reduce the specific surface area of the material, reduce side reactions with the electrolyte solution, and improve electrical performance of the material at high voltage. However, this leads to a decrease in power performance of the material at high voltage.

In addition, a ternary positive electrode active material with a high content of nickel inside the material and a low content of nickel near the surface of the material is also designed to reduce activity of the surface of the material and improve stability of the material. For example, a scheme in which a precursor having a core-shell construction with different content of a target element is prepared by using a two-step coprecipitation method and then sintered has been disclosed. A material with a gradual change in the content of the target element in a shell portion can be obtained by using this method, but because the content of the element in a core-shell portion changes suddenly, an interface between the core and the shell is distinct, and stability of the material is not ideal. For another example, it has been disclosed that the concentration of a raw material solution is adjusted in the preparation of a precursor, a nickel-cobalt-manganese precursor with a gradual change in the content of a target element is prepared by a two-step coprecipitation method, and then mixed with a lithium source and sintered to obtain a positive electrode active material in which the content of nickel gradually decreases from the center to the surface of the particle, and the content of cobalt and manganese gradually increases from the center to the surface of the particle. However, in the material obtained by using this method, because each element has a trend to migrate from a portion having a high concentration to a portion having a low concentration during sintering, a gradient distribution of the element in the particle of the finally obtained material is not ideal, and particularly in a portion close to the surface of the particle (for example, a portion extending inward from the surface of the particle by approximately 1 micrometer), the concentration of each element tends to be constant. Therefore, the ideal target element content cannot be obtained on the surface of the particle.

Based on this, the present disclosure provides a positive electrode active material and a preparation method therefor, a secondary battery, and an electric device. The following provides detailed descriptions with reference to the accompanying drawings.

Positive electrode active material

The present disclosure provides a positive electrode active material. The positive electrode active material includes a particle containing lithium nickel cobalt manganese oxide. In a range of a distance L extending from the surface of the particle to the interior of the particle along the radial direction of the particle, the mass concentration of Co gradually increases from the interior of the particle to the surface of the particle along the radial direction of the particle, where L= 1 $\mu$m.

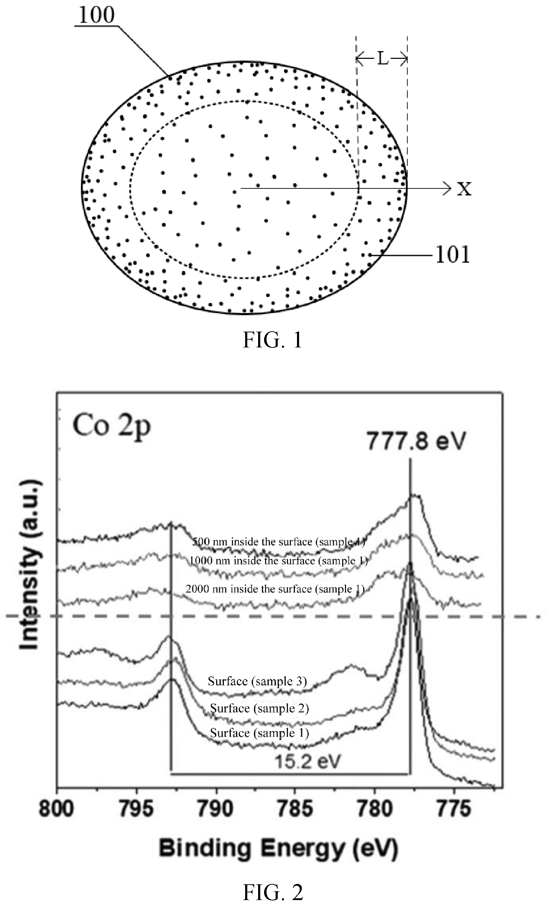

FIG. 1 schematically shows a cross-sectional view of a particle 100 containing lithium nickel cobalt manganese oxide of the positive electrode active material of the present invention, passing through the geometric center of the particle. As shown in FIG. 1, in a range of a certain distance (or depth) L extending to the interior from the surface of the particle 100 along the radial direction x of the particle, the mass concentration of Co element 101 gradually increases from the interior of the particle to the surface of the particle along the radial direction x of the particle.

It should be understood that although a range is defined inside the particle by using a dashed line in FIG. 1, the particle does not have a distinct core-shell construction. Instead, the particle is an integrated crystal particle, especially a single crystal particle.

It should be understood that the elliptical shape of the particle 100 shown in FIG. 1 is merely an example, and is not intended to limit the particle shape of the positive electrode active material of the present disclosure.

The positive electrode active material in implementations of the present invention includes lithium nickel cobalt manganese oxide, which is a nickel cobalt manganese ternary positive electrode active material. The material has a relatively high gram capacity, and the use of the positive electrode active material can enable a lithium-ion secondary battery to have a relatively high capacity. In the positive electrode active material of the present disclosure, the content of Co in a region that is of the particle and that is close to the surface shows a gradient change, which greatly increases the content of Co on the surface of the particle and in a nearby region, and helps to increase the rate of transmitting conductive ions in a battery, thereby effectively improving structural stability of a surface layer of a positive electrode active material particle. In addition, when a voltage is at least 4.4 volts, cobalt can contribute to capacity, and when the content of cobalt on the surface of the particle is high, it is beneficial to exert the capacity of cobalt at high voltage. Therefore, a secondary battery prepared with the positive electrode active material can obtain improved power performance and cycle performance at high voltage. Therefore, the positive electrode active material in the present disclosure can effectively alleviate the problem of poor power performance caused by the design of large particle size of the particle. In addition, because the particle has an integrated structure, the particle has excellent overall stability.

Moreover, in the positive electrode active material of the present disclosure, because cobalt element is more concentratedly distributed on the surface of the particle and in the nearby region, the content of cobalt inside the particle can be reduced while the above effect is achieved, thereby reducing the content of Co in the positive electrode active material as a whole and reducing costs of the material.

In some implementations, L is 1.5 $\mu$m. That is, in a range of 1.5$\mu$m extending from the surface of the particle to the interior of the particle along the radial direction of the particle, the mass concentration of Co gradually increases from the interior of the particle to the surface of the particle along the radial direction of the particle. In these implementations, the Co element can be advantageously distributed in a region closer to the surface of the particle. In some implementations, the mass concentration of Co on the surface of the particle is 1.02 times to 2 times, optionally 1.1 times to 1.8 times, of the mass concentration of Co at a distance L = 1 $\mu$m extending to the interior of the particle along the radial direction of the particle.

Here, the ratio of the mass concentration of Co on the surface of the particle to the mass concentration of Co at a distance L = 1 $\mu$m extending to the interior of the particle along the radial direction of the particle may be a value on the two end points of the above range, or any value between the two end points, for example, 1.02, 1.05, 1.08, 1.0, 1.05, 1.1, 1.15, 1.2, 1.25, 1.3, 1.35, 1.4, 1.45, 1.5, 1.55, 1.6, 1.65, 1.7, 1.75, or 1.8.

In the present disclosure, adjusting a rangeability of the content of Co in the region close to the surface of the particle helps improve capacity and electrical performance of the secondary battery prepared with the positive electrode active material. For example, in some embodiments, when the above ratio is larger, the material has a larger gram capacity and smaller initial DCR, and thus the secondary battery can have a relatively large capacity and a relatively small initial internal resistance value. However, when the ratio is too large, excessive Co on the surface of the material will dissolve out during a charging and discharging cycle of the secondary battery, resulting in damage of the structure of the material, which in turn affects cycle life of the secondary battery.

Further, FIG. 2 is an X-ray photoelectron spectroscopy (XPS) of a positive electrode active material according to some embodiments of the present disclosure. From a peak value of the Co element corresponding to a binding energy of 777.8 eV in FIG. 2, it can be seen that peak values of Co in surface layers of sample 1 (corresponding to Example 1 of the subsequent example section), sample 2 (corresponding to Example 5 of the subsequent example section) and sample 3 (corresponding to Example 6 of the subsequent example section) are substantially the same, indicating that the surface layers of the samples have substantially equivalent content of Co.

Further comparing the peak values of Co element at 777.8eV corresponding to different depths from the interior to the surface layer of the particle of Sample 1 (corresponding to Example 1 of the subsequent example section) in FIG. 2, it can be seen that in Sample 1, the content of Co shows a clear decreasing trend at a plurality of depth positions gradually deepening into the interior of the particle along the surface layer of the particle. This trend is more remarkable in a range from the surface layer of the particle to 1000 nm inside the surface layer, and the trend of decrease in the content of Co slows down in a range of 1000 nm to 2000 nm from the surface layer of the particle.

In the present disclosure, the center region of the particle of the material refers to a region from a position of a distance L extending from the surface of the particle to the interior along the radial direction of the particle to the geometric center of the particle. L = 1 $\mu$m, and optionally, L = 1.5 $\mu$m.

In some implementations, the mass concentration of Ni gradually decreases from the interior of the particle to the surface of the particle along the radial direction of the particle.

It can be understood that the higher the content of Ni is, the larger the gram capacity of a ternary material is, which is more conducive to improving an initial discharge gram capacity of the electrochemical energy storage device. However, when the content of Ni is relatively high, the tetravalent nickel on the surface of the particle has strong oxidizability, and is prone to a side reaction with the electrolyte solution. Therefore, the lower content of nickel on and near the surface of the particle is more beneficial to stability of the surface of the particle.

In addition, $Ni^{2+}$ and $Li^+$ are prone to mixing. The reason is that the radius of $Ni^{2+}$ is similar to that of $Li^+$, and during deintercalation of lithium, $Ni^{2+}$ is more likely to migrate to a vacancy formed by deintercalation of $Li^+$, thereby causing Li precipitation. During repeated charging and discharging, a mixing ratio of $Ni^{2+}$ and $Li^+$ keeps increasing, and a layered structure of the ternary material may collapse, which makes deintercalation of $Li^+$ in the layered structure of the ternary material more and more difficult, and ultimately leads to deterioration of cycle performance of the secondary battery. The existence of Co can effectively stabilize the layered structure of the ternary material and inhibit mixing of lithium and nickel. Therefore, adjusting the content of nickel in and near the surface layer of the particle of the ternary positive electrode active material to be relatively low and the content of cobalt to be relatively high is beneficial to improving stability of the material and improving cycle performance of the secondary battery.

The present disclosure does not particularly limit an overall content of nickel and a gradient change rate in the positive electrode active material. According to some implementations, the positive electrode active material may contain any appropriate content of nickel, particularly a low content of nickel, or a medium content of nickel. The gradient change rate of the content of nickel in the positive electrode active material may be that the content of nickel in a certain region inside the particle is relatively uniform, and in the surface layer of the particle and a region near the surface layer of the particle, the content of nickel gradually decreases from the interior to the surface layer of the particle. For example, the region may be a region in a range of extending from the surface of the particle to the interior along the radial direction of the particle by a distance L, where L = 1.5 $\mu$m, 1 $\mu$m, or 0.5 $\mu$m. In some embodiments, the content of nickel may gradually decrease from the center of the particle to the surface of the particle.

In the implementations of the present disclosure, the mass concentration of Co gradually increases and the mass concentration of Ni gradually decreases from the interior of the particle to the surface of the particle along the radial direction of the particle. Therefore, the present disclosure, on the premise of a low-cost metal ratio with unchanged overall Ni/Co content in the material, reduces the content of Ni in the surface layer and increases the content of Co in the surface layer by changing concentrations of cobalt and nickel at different positions in the particle in a gradient manner, thereby providing a positive electrode active material with high structural stability and good power performance at high voltage.

Similarly, in the implementations of the present disclosure, due to the absence of an obvious core-shell construction, there is no sudden change in the concentration of any element from the interior of the particle to the surface of the particle, thereby facilitating the obtaining of a positive electrode active material with good performance stability.

In some implementations, an absolute value of a difference between the mass concentrations of Li and Mn at any two points in the particle is less than or equal to 20%.

In the present disclosure, the mass concentrations of the Li element and the Mn element at any two points in the particle are the mass concentrations of the Li element and the Mn element accounting for all elements in the minimal volume of the two points. In the present disclosure, a difference between the mass concentrations of Li and Mn at any two points in the particle being less than or equal to 20% means that distribution uniformity of the Li element and the Mn element in the particle is high. Optionally, a difference between the mass concentrations of Li and Mn at any two points in the particle is less than or equal to 15%, less than or equal to 10%, or even less than or equal to 5%. The uniform distribution of the Li element and the Mn element can better exert a performance improvement effect of the Li element and the Mn element on the positive electrode active material. In addition, lithium ions located in different regions inside the particle can also obtain relatively consistent migration and diffusion capabilities in a uniform structure of the Mn element.

Without being bound by existing theories, it is speculated that the reason why the Li element and the Mn element can be distributed uniformly in the particle may be that migration capability of the Li element and the Mn element is stronger than that of the Ni element and the Co element during sintering.

In some implementations, the above positive electrode active material is represented by Formula 1:

$$Li_x(Ni_aCo_bMn_c)_dM_{1-d}O_{2-y}A_y \qquad \text{Formula 1}$$

wherein, $0.95 \leq x \leq 1.3$, $0.3 \leq a \leq 0.7$, $0.01 \leq b \leq 0.15$, $0.1 \leq c \leq 0.5$, $a + b + c = 1$, $0.95 \leq d \leq 1$, $0 \leq y \leq 0.1$, M includes at least one selected from Zr, Sr, B, Ti, Mg, Sn, Tb, W, Nb, and Al, and A includes at least one selected from S, N, F, Cl, Br, and I.

It should be noted that, in the present disclosure, the chemical formula of a lithium nickel manganese oxide material is the chemical formula of the material used during battery preparation. In a positive electrode sheet, a battery cell, and an electric device, due to processes such as formation and cycling, it can be understood by those skilled in the art that the elements in the above chemical formula may be lost. For example, in the positive electrode sheet, the battery cell, and the electric device, oxygen element in the positive electrode active material is lost due to processes such as cycling, and thus a case in which the measured content of oxygen element in the positive electrode active material decreases may occur. In addition, due to processes such as formation and cycling, lithium ions are consumed in the positive electrode sheet, the battery cell, and the electric device, and thus a case in which the measured content of lithium element in the positive electrode active material decreases may occur. In addition, if the positive electrode sheet and a negative electrode sheet are supplemented with lithium, a case in which the measured content of lithium element in the positive electrode active material increases may occur after the processes such as formation and cycling.

In some implementations, the amount of Li in Formula 1 above is represented by a value of x. Optionally, the value of $x$ may be 0.95, 0.98, 1.0, 1.1, 1.2, or 1.3.

The amounts of Ni, Co, and Mn in Formula 1 above are represented by the values of $a$, b and c, respectively. Optionally, $0.5 \leq a \leq 0.65$, $0.05 \leq b \leq 0.12$, $0.95 \leq d \leq 0.99$, a may be 0.3, 0.4, 0.5, 0.6, or 0.7; b may be 0.04, 0.06, 0.08, 0.10, 0.11, 0.12, 0.13, 0.14, or 0.15; and c may be 0.1, 0.2, 0.3, 0.4, or 0.5. As described above, the mass concentration of the cobalt element in the region near the surface of the particle of the positive electrode active material changes in a gradient, and thus there is a relatively high content of Co on the surface of the particle, whereas the content of Co inside the particle is relatively low. Therefore, the positive electrode active material in the present disclosure can still obtain improved structural stability and power performance at high voltage with a reduced content of Co ($0.01 \leq b \leq 0.15$, optionally $0.05 \leq b \leq 0.12$).

In addition, the mass concentration of nickel element in the region near the surface of the particle of the positive electrode active material also changes in a gradient, and thus there is a relatively low content of Ni on the surface of the particle, whereas the content of Ni inside the particle is relatively high. Therefore, the positive electrode active material in the present disclosure can be suitable for a design of low nickel content to medium nickel content ($0.3 \leq a \leq 0.7$, optionally $0.5 \leq a \leq 0.65$) in a case that surface stability of the particle is improved, thereby having an ideal gram capacity.

M is a doping element in Formula 1 above. In the present disclosure, the positive electrode active material may not contain a doping element M. In a preferred implementation, the positive electrode active material contains a doping element M. By doping with M element, oxygen atoms can be effectively bound, and thus the positive electrode active material is not prone to release oxygen during high-temperature cycling and high-temperature storage, and structural stability of the positive electrode active material is significantly improved. In some implementations, the M element is optionally at least one of Zr, Sr, W, Na, Mg, F, P, or the like, or a combination thereof.

The doping amount of the M element is represented by a value of (1-$d$). Optionally, $0.95 \leq d \leq 0.99$. The value of $d$ may be 0.95, 0.96, 0.97, 0.98, or 0.99.

In Formula 1 above, A is also a doping element. In the present disclosure, the positive electrode active material may not or may contain the doping element A. Doping with A element can further improve structural stability of the positive electrode active material, and reduce side reactions on the surface of the particle, thereby further improving cycle performance of the battery.

The doping amount of the A element is represented by a value of *y*. Optionally, $0.02 \leq y \leq 0.1$. The value of *y* may be 0.02, 0.05, 0.07, 0.09, or 0.1.

In the present disclosure, the concentration of a certain element in the positive electrode active material can be obtained by using EDX (Energy Dispersive X-Ray Spectroscopy) or EDS elemental analysis in combination with TEM (Transmission Electron Microscope) or SEM (Scanning Electron Microscope) single-point scanning to test element concentration distribution or other similar methods. When EDX or EDS elemental analysis in combination with TEM or SEM single-point scanning is used to perform a test, taking Li element as an example, the mass concentrations of Li element in $\mu$g/g at different sites in the particle are respectively denoted as $\eta_1, \eta_2, \eta_3, ..., \eta_n$, where n is a positive integer greater than or equal to 15.

The average mass concentration of the Li element in the particle is the mass concentration of the Li element in all elements in a range of a single particle, which can be obtained by using EDX or EDS elemental analysis in combination with TEM or SEM surface scanning to test element concentration distribution or other similar methods. When the element concentration distribution is tested by using EDX or EDS elemental analysis in combination with TEM or SEM surface scanning, a test surface includes all points in the above single-point test. The average mass concentration of the Li element in the particle is denoted as $\bar{\eta}$, with the unit of ppm (that is, parts per million by mass, $\mu$g/g).

Similarly, the average mass concentrations of Ni, Co, Mn, M element, and A element in the particle can all be measured and calculated by using the above method.

A mass concentration deviation $\sigma$ of the Li element at any point in the particle is calculated according to Formula 2:

$$\sigma = \frac{\max\{|\eta_1 - \bar{\eta}|, |\eta_2 - \bar{\eta}|, |\eta_3 - \bar{\eta}|, \cdots, |\eta_{15} - \bar{\eta}|\}}{\bar{\eta}} \text{ Formula 2}$$

It can be understood that a mass concentration deviation of the Mn element at any two points in the particle can also be obtained by using the above test and calculation method.

Similarly, in the particle, the average mass concentration of Co or Ni element in a certain region or the mass concentration of Co or Ni element at a certain point can be obtained by using the above test and calculation method. In this way, the multiple of the mass concentration of Co on the surface of the particle to the mass concentration of Co at a distance of L = 1 $\mu$m extending to the interior along the radial direction of the particle can be calculated.

In some implementations, the volume distribution particle size Dv50 of the particle is in a range of 3.5 $\mu$m < Dv50 $\leq$ 7.5 $\mu$m, optionally 4 $\mu$m < Dv50 $\leq$ 7 $\mu$m.

In the present disclosure, the volume distribution particle size Dv50 of the particle of the positive electrode active material is the meaning well known in the art, which represents the particle size at which the cumulative volume distribution percentage of the material reaches 50%, and may be measured by instruments and methods known in the art. For example, the volume distribution particle size may be measured using a laser particle size analyzer with reference to GB/T 19077-2016. The testing instrument may be a Mastersizer Model 3000 laser particle size analyzer from Malvern Instruments Ltd., UK.

Here, a value of the volume distribution particle size of the particle in the above range may be a value on the two end points or any value between the two end points, for example, 3.5 $\mu$m, 3.7 $\mu$m, 3.9 $\mu$m, 4 $\mu$m, 4.1 $\mu$m, 4.2 $\mu$m, 4.3 $\mu$m, 4.5 $\mu$m, 4.7 $\mu$m, 4.9 $\mu$m, 5 $\mu$m, 5.1 $\mu$m, 5.3 $\mu$m, 5.5 $\mu$m, 5.7 $\mu$m, 5.9 $\mu$m, 6 $\mu$m, 6.1 $\mu$m, 6.3 $\mu$m, 6.5 $\mu$m, 6.7 $\mu$m, 7 $\mu$m, 7.2 $\mu$m, 7.3 $\mu$m, or 7.5 $\mu$m.

When the volume distribution particle size of the particle is in the above range, due to a small particle size of the particle, it is beneficial for electron conductivity and ion transmission, thereby further reducing impedance of the secondary battery and improving power performance and dynamic performance.

In some implementations, the positive electrode active material further has a coating layer. Optionally, the coating layer is an oxide or hydroxide of M', and M' includes at least one selected from Mg, Al, Ca, Ba, Ti, Zr, Zn, Nb, Sb, Ce, La, W, and B. Optionally, M' includes at least one selected from Al, Ti, Zr, Nb, and W.

In the present disclosure, by coating and modifying the surface of the particle of the positive electrode active material, a particle material can be effectively protected, so that an interface of the particle is more stable, and a phase transition of a surface-layer structure can be effectively reduced. In addition, the existence of the coating layer can further effectively protect the surface of the positive electrode active material from being corroded by the electrolyte solution, thereby reducing side reactions, improving gas production resistance performance of the material, reducing a gas production amount of the battery, and improving cycle performance of the battery.

In some implementations, the thickness of the coating layer is 0.001 $\mu$m to 0.5 $\mu$m, optionally 0.01 $\mu$m to 0.1 $\mu$m.

Here, the value of the thickness of the coating layer may be a value on the two end points, or any value between the two end points, for example, 0.005 $\mu$m, 0.01 $\mu$m, 0.015 $\mu$m, 0.02 $\mu$m, 0.025 $\mu$m, 0.03 $\mu$m, 0.035 $\mu$m, 0.04 $\mu$m, 0.045 $\mu$m, 0.05 $\mu$m, 0.055 $\mu$m, 0.06 $\mu$m, 0.065 $\mu$m, 0.07 $\mu$m, 0.075 $\mu$m, 0.080 $\mu$m, 0.085 $\mu$m, 0.09 $\mu$m, 0.095 $\mu$m, 0.1 $\mu$m, 0.2

μm, 0.3 μm, 0.4 μm, or 0.5 μm.

In the present disclosure, by controlling the thickness of the coating layer in the above range, contact between the electrolyte solution and a bulk particle can be effectively isolated, side reactions can be reduced, and lithium ions can have good diffusion and migration capabilities in the positive electrode active material.

The present disclosure further provides a preparation method for the above positive electrode active material. The preparation method includes the following steps:

S1: Mix lithium salt, a hydroxide of Ni, Co, and Mn as a precursor, and an optional compound containing a doping element M, and perform first sintering, to obtain an initial material particle.

S2: Mix the initial material particle with a cobalt-containing compound, and perform second sintering, to obtain a particle containing lithium nickel cobalt manganese oxide.

In the preparation method for the positive electrode active material of the present disclosure, an initial material particle having a target composition is first prepared through first sintering, and then is second sintered together with a cobalt-containing compound, thereby obtaining a positive electrode active material with the above characteristics, where in a range of a distance L = 1 μm extending from the surface of the particle to the interior of the particle along the radial direction of the particle, the mass concentration of Co gradually decreases from the interior of the particle to the surface of the particle along the radial direction of the particle. In addition, the particle does not have a distinct core-shell construction. There is no distinct interface in which the mass concentration of the Co element (and other elements) in the particle changes abruptly. Instead, the particle is an integrated crystal particle, especially a single crystal particle.

During the second sintering, the cobalt-containing compound is coated on the surface of the initial material particle. In this way, the content of Co in the initial material particle is lower than that on the surface, and Co ions diffuse from the surface of the particle to a bulk phase. From the surface layer of the particle to a certain depth inside the particle, the content of Co shows a gradually decreasing trend without any sudden change. As a result, a positive electrode active material is obtained.

In S1, a lithium source, a precursor of Ni, Co, and Mn, and optionally a compound containing a doping element M and a compound containing a doping element A are mixed, and first sintering is performed, to obtain an initial material particle.

As an example of preparing a composition containing the initial material particle, lithium salt, a hydroxide of Ni, Co, and Mn as a precursor, and, if any, a compound containing the M element and/or a compound containing the A element are placed in, for example, a ball mill mixer or a high-speed mixer and mixed. The time for mixing may be, for example, 0.5 h to 3 h.

The present disclosure has no particular limitation on the lithium source used in the first sintering. For example, the lithium source may be one or a plurality of lithium oxide ($Li_2O$), lithium phosphate ($Li_3PO_4$), lithium dihydrogen phosphate ($LiH_2PO_4$), lithium acetate ($CH_3COOLi$), lithium hydroxide (LiOH), lithium carbonate ($Li_2CO_3$), or lithium nitrate ($LiNO_3$). Further, the lithium source is one or a plurality of lithium carbonate, lithium hydroxide, or lithium nitrate; and furthermore, the lithium source is lithium carbonate.

The present disclosure also has no particular limitation on the precursor of Ni, Co, and Mn used in the first sintering. For example, the precursor is one or a plurality of an oxide, a hydroxide, or a carbonate that contains Ni, Co, and Mn, for example, a hydroxide containing Ni, Co, and Mn. The precursor can be prepared by using any method. The precursor can be prepared, for example, by using a coprecipitation method, a gel method, a solid-phase method, or the like, but the method is not limited thereto.

In some implementations, the precursor is prepared by using a coprecipitation method. Hereinafter, a preparation method for a hydroxide precursor of Ni, Co, and Mn will be described by taking a coprecipitation method as an example.

A Ni source, a Co source, and a Mn source are dispersed in a solvent to obtain a mixed solution; the mixed solution, a strong base solution, and a complexing agent solution are simultaneously pumped into a stirred pot simultaneously in a continuous parallel flow reaction mode, the pH value of the reaction solution is controlled to be 10-13, the temperature in the pot to be 25°C-90°C, and an inert gas is introduced for protection during the reaction; and after the reaction is completed, aging, filtering, washing and vacuum drying are performed to obtain a hydroxide containing Ni, Co, and Mn.

The Ni source is a soluble nickel salt. For example, the Ni source is one or a plurality of nickel sulfate, nickel nitrate, nickel chloride, nickel oxalate, or nickel acetate. Optionally, the Ni source is one or a plurality of nickel sulfate or nickel nitrate, and is further nickel sulfate.

The Co source is a soluble cobalt salt, for example, one or a plurality of cobalt sulfate, cobalt nitrate, cobalt chloride, cobalt oxalate, or cobalt acetate. Optionally, the Co source is one or a plurality of cobalt sulfate or cobalt nitrate, and is further cobalt sulfate.

The Mn source is a soluble manganese salt, such as one or a plurality of manganese sulfate, manganese nitrate, manganese chloride, manganese oxalate, or manganese acetate. Optionally, the Mn source is one or a plurality of manganese sulfate or manganese nitrate, and is further manganese sulfate.

The strong base is one or a plurality of LiOH, NaOH, or KOH.

The complexing agent is one or a plurality of aqueous ammonia, ammonium sulfate, ammonium nitrate, ammonium chloride, ammonium citrate, or disodium ethylenediamine tetraacetate (EDTA), such as aqueous ammonia.

Solvents of the mixed solution, the strong base solution, and the complexing agent solution are not particularly limited. For example, the solvents of the mixed solution, the strong base solution, and the complexing agent solution each are independently one or a plurality of deionized water, methanol, ethanol, acetone, isopropanol, or n-hexanol, such as deionized water.

The inert gas introduced during the reaction is, for example, one or a plurality of nitrogen, argon, or helium.

In some implementations, the molar ratio of Ni:Co:Mn in the precursor is in a range of (50-70):(6-25):(29-40), optionally (55-65):(6-12):(29-33).

By controlling the value of the molar ratio of Ni:Co:Mn in the precursor to be in the above range, it is helpful to implement excellent performance of the foregoing positive electrode active material.

In some implementations, the positive electrode active material includes a doping element M. In the embodiments, a compound containing the doping element M is added during the first sintering. The doping element M is as defined above. The compound containing the doping element M is one or a plurality of an oxide, a nitrate, a carbonate, a bicarbonate, a sulfate, a chloride, a hydroxide, or an acetate of the element M. Those skilled in the art can determine an appropriate compound containing the M element based on the selected M element.

In some implementations, the positive electrode active material further includes a doping element A. In the embodiments, a compound containing the doping element A is added during the first sintering. The doping element A is as defined above. The compound containing the doping element A is one or a plurality of ammonium salt or lithium salt of the element A, for example, one or a plurality of $NH_4F$, $NH_4Cl$, $NH_4Br$, $(NH_4)_2S$, LiF, LiCl, LiBr, or $Li_2S$.

The lithium source, the precursor of Ni, Co, and Mn, and optionally the compound containing the doping element M and the compound containing the doping element A may be mixed at a stoichiometric ratio of each element shown in Formula 1 above and first sintered.

In some implementations, the temperature of the first sintering is kept for 5 h to 25 h at 600°C to 1000°C, optionally for 8 h to 20 h at 650°C to 950°C.

The first sintering temperature may be a value on the two end points or any value between the two end points, for example, 600°C, 620°C, 650°C, 670°C, 700°C, 720°C, 750°C, 780°C, 800°C, 820°C, 850°C, 880°C, 900°C, 920°C, 950°C, 980°C, or 1000°C. The holding time at the first sintering temperature may be a value on the two end points or any value between the two end points, for example, 5 h, 8 h, 9 h, 10 h, 11 h, 12 h, 13 h, 14 h, 15 h, 16 h, 17 h, 18 h, 19 h, 20 h, 22 h, or 25 h.

After the first sintering, the obtained material through sintering is cooled to room temperature and then ground for 5 hours to obtain the initial material particle.

A process condition of the first sintering is substantially the same as a process condition of the conventional ternary positive electrode active material during preparation. For example, in S2, the initial material particle is mixed with a cobalt-containing compound, and second sintering is performed, to obtain a particle containing lithium nickel cobalt manganese oxide.

For example, the obtained initial material particle can be mixed with a cobalt-containing compound, for example, in a high-speed mixer.

The cobalt-containing compound may be any one or a plurality of the cobalt sources described above, which will not be repeated here.

In some implementations, the ratio of the used amount of the cobalt-containing compound calculated as cobalt element to the mass of the particle containing the lithium nickel cobalt manganese oxide is in a range of 2000 ppm to 10000 ppm, optionally 4000 ppm to 7000 ppm. The above ratio range refers to a range of an addition amount of the cobalt-containing compound when mixed with the initial material particle. Specifically, the addition amount of the cobalt-containing compound in the above range is calculated based on the mass (unit: $\mu$g) of the cobalt-containing compound required to be added with respect to 1g of the finally obtained particle containing lithium nickel cobalt manganese oxide.

Here, the value of the ratio of the used amount of the cobalt-containing compound, calculated as the cobalt element, to the mass of the particle containing lithium nickel cobalt manganese oxide may be a value on the two end points or any value between the two end points, for example, 2200 ppm, 2500 ppm, 2800 ppm, 3000 ppm, 3200 ppm, 3500 ppm, 3800 ppm, 4000 ppm, 4200 ppm, 4500 ppm, 4800 ppm, 5000 ppm, 5500 ppm, 6000 ppm, 6500 ppm, 7000 ppm, 7200 ppm, 7500 ppm, 8000 ppm, 8200 ppm, 8500 ppm, 9000 ppm, 9500 ppm, 9800 ppm, or 10000 ppm.

By controlling an addition amount of the cobalt-containing compound to be in the above range, it is helpful for the surface layer and the nearby region of the obtained particle material to have an ideal mass concentration of Co and a good concentration gradient, thereby implementing excellent performance of the foregoing positive electrode active material.

In some implementations, the temperature of the second sintering is kept for 5 h to 7 h at 650°C to 800°C.

For example, the value of the second sintering temperature may be a value on the two end points or any value between the two end points, for example, 650°C, 660°C, 670°C, 680°C, 690°C, 700°C, 710°C, 720°C, 730°C, 740°C, 750°C, 760°C, 770°C, 780°C, 790°C, or 800°C. The holding time at the second sintering temperature (also referred to as the second sintering time) may be a value on the two end points or any value between the two end points, for example, 5 h, 5.5 h, 6 h, 6.5 h, or 7 h.

Through the second sintering, the cobalt-containing compound coated on the surface of the initial material particle and the initial material particle become an integrated particle. Because the content of cobalt element in the surface layer of the particle is higher than the content of cobalt element in the initial material particle, the cobalt element gradually diffuses into the interior of the initial material particle during the second sintering to form a material particle in which the content of Co in the surface layer is relatively high, whereas the content of Co in the radial direction from the surface layer to a certain depth inside the particle shows a gradually decreasing trend, thereby helping to obtain a positive electrode active material with high structural stability and good power performance.

In order to avoid a case that the content of Co in the surface layer of the finally obtained particle tends to be consistent, the second sintering temperature should not be too high, and the sintering time should not be too long. In addition, the second sintering temperature should not be too low, and the sintering time should not be too short, so as to prevent the cobalt-containing compound from failing to completely form an integrated single crystal particle with the initial material particle. In the above ranges of the second sintering temperature and the second sintering time, the final integrated particle containing lithium nickel cobalt manganese oxide can be obtained, and the surface layer of the particle has ideal content of Co. In the particle, in a range of a certain distance extending from the surface of the particle to the interior of the particle along the radial direction of the particle for a certain distance, the mass concentration of Co gradually increases along the radial direction of the particle from the interior of the particle to the surface of the particle.

In addition, some of Ni and Mn elements in the initial material particle also diffuse to the vicinity of the surface layer of the particle of the finally obtained lithium nickel cobalt manganese oxide. Because only the cobalt-containing compound is further added in the second sintering, the content of Ni in the surface layer and the nearby region of the final particle shows a gradually decreasing trend from the interior to the surface of the particle. However, the Mn element may have a relatively uniform distribution in the particle due to a strong element migration capability thereof.

In some implementations, the second sintering is performed in an oxygen-rich atmosphere, and optionally the volume ratio of air to oxygen in the oxygen-rich atmosphere is between (0:10) and (8:2).

Here, the volume ratio of air to oxygen may be a value on the two end points or any value between the two end points, for example, 0:10, 1:9, 2:8, 3:7, 4:6, 5:6, 6:4, or 8:2.

In the present disclosure, performing the second sintering in the oxygen-rich sintering atmosphere helps inhibit Li/Ni mixing caused by low cobalt during sintering, which can prolong life of the material and help to increase cycle life of the secondary battery.

In some embodiments, the preparation method further includes: mixing the particle containing the lithium nickel cobalt manganese oxide with an M' source, and performing third sintering, to form a coating layer on the surface of the particle. Optionally, M' includes at least one selected from Mg, Al, Ca, Ba, Ti, Zr, Zn, Nb, Sb, Ce, La, W, and B.

The present disclosure has no particular limitation on the M' source. For example, the M' source may be one or a plurality of a chloride, a sulfate, a nitrate, an oxide, a hydroxide, a fluoride, a carbonate, a bicarbonate, an acetate, a phosphate, a dihydrogen phosphate, or an organic compound of the above element, but is not limited thereto. Those skilled in the art can determine an appropriate compound as the M' source based on the selected M element.

In this implementation, the addition amount of the compound used as the M' source with respect to the finally obtained positive electrode active material, calculated as M' element, is 100 ppm to 3000 ppm, for example, 100 ppm, 300 ppm, 400 ppm, 700 ppm, 1000 ppm, 1300 ppm, 1500 ppm, 1800 ppm, 2000 ppm, 2200 ppm, 2500 ppm, 2700 ppm, or 3000 ppm. The addition amount of the compound of the M' source being in the above range can make the finally obtained coating layer have the above appropriate thickness, thereby well isolating a particle body from the electrolyte solution, reducing positive electrode side reactions, and ensuring that the positive electrode active material has good lithium ion diffusion and migration capabilities.

In some example implementations, performing the third sintering operation includes: uniformly mixing the particle of lithium nickel cobalt manganese oxide obtained during the second sintering with a compound as the M' source, and then performing sintering at a temperature of 250°C to 350°C for 4 h to 6 h and keeping the temperature for 4 h to 6 h to obtain a positive electrode active material particle having a coating layer of the M' oxide. Due to a low sintering temperature, the M' element is not likely to diffuse into the bulk particle, and the elements in the bulk particle are not likely to further diffuse.

The present disclosure further provides a secondary battery and an electric device.

The secondary battery and the electric device in the present disclosure will be described below with reference to the accompanying drawings as appropriate.

In an implementation of the present disclosure, a secondary battery is provided.

The term "secondary battery" as referred to herein refers to a battery cell, a battery module, or a battery pack.

Each of these is described below.

Generally, a secondary battery cell includes a positive electrode sheet, a negative electrode sheet, an electrolyte, and a separator. During charging and discharging of the battery, active ions (that is, lithium ions) are intercalated and deintercalated back and forth between the positive electrode sheet and the negative electrode sheet. The electrolyte functions to conduct ions between the positive electrode sheet and the negative electrode sheet. The separator is disposed between the positive electrode sheet and the negative electrode sheet, to mainly prevent positive and negative electrodes from being short-circuited and allow ions to pass through.

Positive electrode sheet

The positive electrode sheet includes a positive electrode current collector and a positive electrode film layer arranged on at least one surface of the positive electrode current collector, the positive electrode film layer including the positive electrode active material in the present disclosure.

As an example, the positive electrode current collector has two surfaces opposed in its own thickness direction, and the positive electrode film layer is provided on either one or both of the two opposed surfaces of the positive electrode current collector.

In some implementations, the positive electrode current collector may be a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

The positive electrode active material of the secondary battery in the present disclosure includes at least the above positive electrode active material in the present disclosure. In some implementations, the positive electrode active material may further include a positive electrode active material for a lithium ion battery well known in the art. As an example, the positive electrode active material may further include at least one of the following materials: olivine-structured lithium-containing phosphate, lithium-transition metal oxide, and respective modifying compounds thereof. However, the present disclosure is not limited to these materials, and another conventional material that can be used as a positive electrode active material of a battery may also be used. These positive electrode active materials may be used alone or in combination of two or more thereof. Examples of the lithium transition metal oxide may include, but are not limited to, at least one of lithium cobalt oxide (e.g., $LiCoO_2$), lithium nickel oxide (for example, $LiNiO_2$), lithium manganese oxide (e.g., $LiMnO_2$ or $LiMn_2O_4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_2$ (also simply referred to as $NCM_{333}$), $LiNi_{0.5}Co_{0.2}Mn_{0.3}O_2$ (also simply referred to as $NCM_{523}$), $LiNi_{0.5}Co_{0.25}Mn_{0.25}O_2$ (also simply referred to as $NCM_{211}$), $LiNi_{0.6}Co_{0.2}Mn_{0.2}O_2$ (also simply referred to as $NCM_{622}$), $LiNi_{0.8}Co_{0.1}Mn_{0.1}O_2$ (also simply referred to as $NCM_{811}$)), lithium nickel cobalt aluminum oxide (e.g., $LiNi_{0.85}Co_{0.15}Al_{0.05}O_2$), modifying compounds thereof, and the like. Examples of the olivine-structured lithium-containing phosphate may include, but are not limited to, at least one of lithium iron phosphate (e.g., $LiFePO_4$ (which may also be simply referred to as LFP)), a composite of lithium iron phosphate and carbon, lithium manganese phosphate (e.g., $LiMnPO_4$), a composite material of lithium manganese phosphate and carbon, lithium ferro-manganese phosphate, and a composite material of lithium ferro-manganese phosphate and carbon.

Deintercalation and consumption of Li occur during charging and discharging of the battery, and the molar content of Li varies when the battery is discharged to different states. In the enumeration of the positive electrode active material in the present disclosure, the molar content of Li is an initial state of the material, that is, a state before adding. The positive electrode active material is applied to a battery system, and the molar content of Li changes after charging and discharging cycles.

In the enumeration of the positive electrode active material in the present disclosure, the molar content of O is only a theoretical state value, the molar content of oxygen changes due to the release of oxygen from a lattice, and the actual molar content of O fluctuates.

In some embodiments, the positive electrode film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally includes a conductive agent. As an example, the conductive agent may include at least one of superconducting carbon, acetylene black, carbon black, ketjen black, carbon dots, carbon nanotubes, graphene, and carbon nanofibers.

In some implementations, the positive electrode sheet may be prepared by dispersing the above components for preparing a positive electrode sheet, for example, a positive electrode active material, a conductive agent, a binder, and any other components in a solvent (for example, N-methylpyrrolidone) to form a positive electrode slurry, and applying the positive electrode slurry to a positive electrode current collector, followed by drying, cold pressing, and the like.

Negative electrode sheet

The negative electrode sheet includes a negative electrode current collector and a negative electrode film layer disposed on at least one surface of the negative electrode current collector, the negative electrode film layer including a negative electrode active material.

As an example, the negative pole current collector has two surfaces opposite in its own thickness direction, and the negative pole film layer is disposed on either one or both of the two opposite surfaces of the negative pole current collector.

In some implementations, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some embodiments, the negative pole active material may be a negative pole active material well-known in the art for batteries. As an example, the negative active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present disclosure is not limited to these materials, and another conventional material that can be used as a negative electrode active material of a battery may also be used. These negative active materials may be used alone or in combination of two or more thereof.

In some embodiments, the negative electrode film layer optionally further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), poly(methyl acrylic acid) (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes another auxiliary agent, for example, a thickening agent (e.g., sodium carboxymethyl cellulose (CMC-Na)).

In some embodiments, the negative pole piece may be prepared in the following manner: dispersing the above-mentioned components for preparing the negative pole piece, for example, the negative pole active material, the conductive agent, the binder, and any other component in a solvent (e.g., deionized water) to form a negative pole paste; and coating the negative pole paste on the negative pole current collector, and performing procedures such as drying and cold pressing, to obtain the negative pole piece.

Electrolyte

The electrolyte functions to conduct ions between the positive electrode sheet and the negative electrode sheet. The type of the electrolyte is not particularly limited in the present disclosure, and may be selected according to a requirement. For example, the electrolyte may be liquid.

In some implementations, the electrolyte uses an electrolyte solution. The electrolyte solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution further optionally includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

Separator

In some implementations, the battery cell further includes a separator. The type of the separator is not particularly limited in the present disclosure, and any well-known porous separator with good chemical stability and mechanical stability may be used.

In some embodiments, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some embodiments, the positive electrode sheet, the negative electrode sheet, and the separator may be manufactured into the electrode assembly through a winding process or a lamination process.

In some embodiments, the battery cell may include an outer package. The outer package may be used to package the foregoing electrode assembly and electrolyte.

In some embodiments, the outer package of the battery cell may be a hard casing, for example, a hard plastic casing, an aluminum casing, or a steel casing. The outer package of the battery cell may also be a pouch, such as a bag-type pouch. The material of the pouch may be plastic, and examples of the plastic include polypropylene, polybutylene terephthalate, and polybutylene succinate.

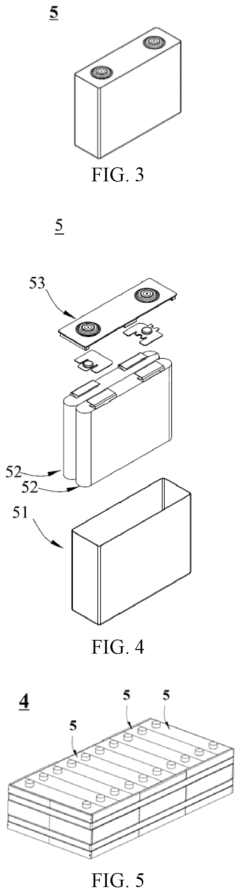

The shape of the battery cell is not particularly limited in the present disclosure, and may be a cylindrical shape, a square shape, or any other shape. For example, FIG. 3 shows a battery cell 5 with a square structure as an example.

In some implementations, referring to FIG. 4, the outer package may include a housing 51 and a top cover assembly 53. The housing 51 may include a bottom plate and side plates connected to the bottom plate, and the bottom plate and the side plates define an accommodating chamber. The housing 51 has an opening communicating with the accommodating chamber, and the top cover assembly 53 can cover the opening to close the accommodating chamber. The positive electrode sheet, the negative electrode sheet, and the separator may be formed into an electrode assembly 52 through a winding process or a lamination process. The electrode assembly 52 is packaged within the accommodating chamber. The electrolyte solution is impregnated into the electrode assembly 52. There may be one or a plurality of electrode assemblies 52 included in the battery cell 5, and those skilled in the art may perform selection according to specific actual requirements.

In some embodiments, the battery cell may be assembled into a battery module, there may be one or a plurality of battery cells included in the battery module, and those skilled in the art may make a selection based on the application and capacity of the battery module.

FIG. 5 shows a battery module 4 as an example. Referring to FIG. 5, in the battery module 4, a plurality of battery cells 5 may be arranged sequentially along the length direction of the battery module 4. Certainly, the battery cells may alternatively be arranged in any other manner. Further, the plurality of battery cells 5 may be fastened by using fasteners.

Optionally, the battery module 4 may further include a casing having an accommodating space in which the plurality of battery cells 5 are accommodated.

In some implementations, the battery modules may be further assembled into a battery pack, and there may be one or a plurality of battery modules included in the battery pack, and the specific number may be selected by those skilled in the art according to the application and capacity of the battery pack.

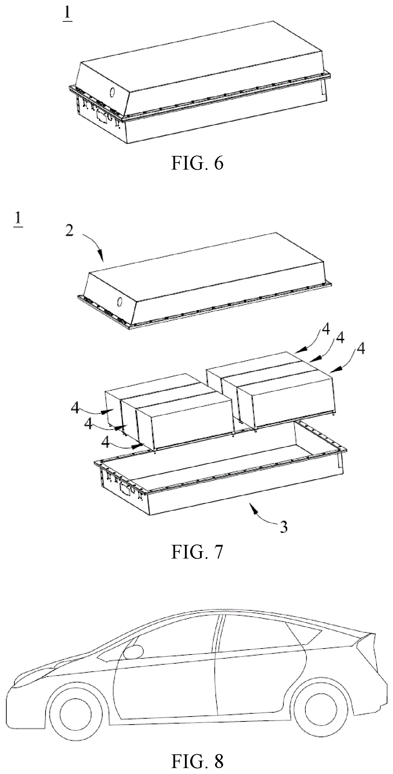

FIG. 6 and FIG. 7 show a battery pack 1 as an example. Referring to FIG. 6 and FIG. 7, a battery case and a plurality of battery modules 4 disposed in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery case.

In addition, the present disclosure further provides an electric device, including a secondary battery provided in the present disclosure. The secondary battery may be used as a power supply for the electric device, or as an energy storage unit for the electric device. The electrical device may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

As the electric device, the battery cell, the battery module or the battery pack may be selected according to the use requirements.

FIG. 8 shows an electric device as an example. The electrical device is a pure electric vehicle, a hybrid electric vehicle, a plug-in hybrid electric vehicle, or the like. In order to meet the demand for high power and high energy density of the secondary battery by the electrical device, a battery pack or a battery module may be used.

In another example, the electrical device may be a cell phone, a tablet computer, a notebook computer, or the like. The device is generally required to be thin and lightweight, and may use a battery cell as a power supply.

**Examples**

Examples of the present disclosure are described below. The examples described below are illustrative, and are only used to explain the present disclosure, rather than being construed as limiting the present disclosure. In the examples, specific techniques or conditions are not indicated, and they are performed according to techniques or conditions described in documents in the art or according to the specification of the product. The reagents or instruments used without specifying the manufacturer(s) are conventional products that are commercially available.

**Examples**

Preparation of positive electrode active material

Example 1

Preparation of precursor of positive electrode active material: In a continuous stirred tank reactor vessel, nickel sulfate, manganese sulfate, and cobalt sulfate were added to deionized water at a molar ratio of Ni:Co:Mn = 55:6:39 (based on each element) to prepare a transition metal salt solution with a total molar concentration of 2 mol/L; 4 mol/L sodium hydroxide was added as a precipitant, 0.4 mol/L aqueous ammonia was added as a complexing agent; and a precursor $Ni_{0.55}Co_{0.06}Mn_{0.39}(OH)_2$ was prepared through a coprecipitation reaction at a pH of 11.3 for 24 hours.

Preparation method for positive electrode active material:

Step S1: The above precursor and lithium carbonate (as a Li-containing compound) at a molar ratio of 1:1.07, 1000 ppm of $Al_2O_3$ added by being calculated as Al element, and 2000 ppm of $WO_3$ added by being calculated as W element were mixed in a high-speed mixer, and then the mixture was sintered in a furnace at 900°C for 12 h, cooled to room temperature, and mechanically ground by a jet mill for 5 hours to obtain a product N1.

Step S2: A mixture of the product N1 obtained in the previous step and 4000 ppm (calculated as cobalt element) of $Co(OH)_2$ was mixed in a high-speed mixer, and then sintered in a furnace at 700°C for 6 h to obtain a product N2; and after high-temperature sintering, metal ions diffuse to form a structure with high content of Co in the surface layer and low content of Co at a certain depth inside.

Step S3: The product N2 obtained in step S2 was uniformly mixed with 2000 ppm of $TiO_2$ and then sintered at 300°C for 5 h to obtain the single crystal positive electrode active material in the present disclosure, where the Dv50 of the single crystal positive electrode active material was approximately 4 $\mu$m, and the stoichiometric formula of the product N1 was shown in Table 1.

Examples 2-26

A positive electrode active material in each example was prepared in a similar manner to Example 1. For a changed material composition, a raw material amount, and a preparation process condition, reference could be made to Table 1, and the contents not listed in Table 1 were the same as those in Example 1. In these examples, the Dv50 of the obtained positive electrode active materials were all approximately 4 $\mu$m.

Comparative Example 1

Different from the preparation method for the positive electrode active material in Example 1, in Comparative Example 1, the preparation process of step S2 is omitted. The Dv50 of the obtained positive electrode active material was approximately 4 $\mu$m.

Comparative Example 2

Different from the preparation method for the positive electrode active material in Example 1, in Comparative Example 2, the preparation processes of step S2 and step S3 are omitted. The Dv50 of the obtained positive electrode active material was approximately 4 $\mu$m.

**Preparation of lithium-ion battery**

Preparation of positive electrode sheet: Each of the positive electrode active materials in Examples 1-26 and Comparative Examples 1-2 prepared above, conductive carbon black SP, and a binder PVDF were dispersed in a solvent NMP at a weight ratio of 98:1:1 and mixed uniformly to obtain positive electrode slurry. The positive electrode slurry was uniformly coated on a positive electrode current collector aluminum foil, and after drying and cold pressing, a positive electrode sheet was obtained, with a coating amount per unit area of 0.27 g/1540.25 mm$^2$.

Preparation of negative electrode material: A negative electrode active material graphite, a thickener sodium carboxymethyl cellulose, a binder styrene-butadiene rubber, and a conductive agent acetylene black were mixed at a mass ratio of 97:1:1:1, deionized water was added, and negative electrode slurry was obtained under the action of a vacuum mixer. The negative electrode slurry was uniformly coated on a copper foil, dried at room temperature, transferred to a 120°C oven and dried for 1 h, then cold pressed and slit to obtain a negative electrode sheet, with a coating amount per unit area of 0.17 g11540.25 mm$^2$.

Preparation of electrolyte solution: The organic solvent was a mixed solution containing ethylene carbonate (EC), ethyl methyl carbonate (EMC), and diethyl carbonate (DEC), where the volume ratio of EC, EMC, and DEC was 20:20:60. In an argon atmosphere glove box with water content of less than 10 ppm, sufficiently dried lithium salt (lithium hexafluorophosphate) was dissolved in the above organic solvent and mixed uniformly to obtain an electrolyte solution. The concentration of the lithium salt was 1 mol/L.

Separator: A polypropylene separator with a thickness of 12 $\mu$m was selected.

Preparation of lithium-ion battery: The positive electrode sheet, the separator, and the negative electrode sheet prepared above were stacked in sequence, so that the separator was located between the positive electrode sheet and the negative electrode sheet to play a role of isolation, and then wound into a square bare cell. Then, an aluminum plastic film was loaded, and then baked at 80°C to remove water. The electrolyte solution prepared above is injected and sealed. After procedures such as formation and capacity grading, a finished battery was obtained.

Performance tests:

The positive electrode active materials and batteries obtained in the above examples and comparative examples were tested as follows.

1. X-Ray photoelectron spectroscopy (XPS)

The positive electrode active material prepared in Example 1 was subjected to surface and internal analysis by using Shimadzu's Axis Supra + X-ray photoelectron spectroscopy. For specific test results, reference was made to FIG. 2. In order to determine a situation of the interior of the positive electrode active material, the positive electrode active material prepared in Example 1 was cut by using an argon ion polishing technology to remove an outer layer material of a predetermined thickness (500 nm, 1000 nm, and 2000 nm) before performing an X-ray photoelectron spectroscopy operation.

The positive electrode active materials prepared in Example 5 and Example 6 were subjected to surface analysis by using Shimadzu's Axis Supra + X-ray photoelectron spectroscopy. For specific test results, reference was made to FIG. 2.

The positive electrode active materials prepared in Example 3 and Example 8 were subjected to surface and internal analyses in the same manner. Similarly, in order to determine a situation of the interior of the positive electrode active material, the positive electrode active materials prepared in Example 3 and Example 8 were cut by using an argon ion polishing technology to remove an outer layer material of a predetermined thickness before performing an X-ray photoelectron spectroscopy operation, so as to obtain a situation at 1000 nm (1 $\mu$m) from the surface.

By calculating the peak area at 777.8 eV of the curves obtained in Example 1, Example 3, and Example 8 (dividing the peak area at the surface by the peak area at 1000 nm), a ratio relationship between the mass concentration of Co on the surface of the positive electrode active material particle and the mass concentration of Co at a distance of L = 1 $\mu$m extending to the interior of the particle along the radial direction of the particle was obtained.

In Example 1, the ratio of the mass concentration of Co on the surface of the positive electrode active material particle to the mass concentration of Co at a distance of L = 1 $\mu$m extending to the interior of the particle along the radial direction of the particle was 1.5; in Example 3, the ratio of the mass concentration of Co on the surface of the positive electrode active material particle to the mass concentration of Co at a distance of L = 1 $\mu$m extending to the interior of the particle along the radial direction of the particle was 1.2; and in Example 8, the ratio of the mass concentration of Co on the surface of the positive electrode active material particle to the mass concentration of Co at a distance of L = 1 $\mu$m extending to the interior of the particle along the radial direction of the particle was 1.6.

2. Gram capacity of battery

A pouch battery was left to stand in a constant temperature environment of 25°C for 2 h, then charged to 4.5 V at 1/3 C at 2.8 V to 4.5 V, then charged at a constant voltage of 4.5 V until the current was less than or equal to 0.05 mA, left to stand for 5 min, and then discharged to 2.8 V at 1 C, and the capacity $C_{discharge}$ of the battery was recorded. The gram capacity of the battery was calculated according to the following formula.

Gram capacity = capacity $C_{discharge}$ of battery (mAh)/mass of positive electrode active material (g).

3. Direct current resistance (DCR)

Each of the lithium ion batteries prepared above was left at room temperature until thermal equilibrium was reached. Three standard charging and discharging cycles were performed at a current of 1/3 C with a cut-off voltage of 4.5 V, and the capacity of the battery at the third standard charging and discharging cycle was recorded as the standard capacity C. The battery was placed at a test temperature of 25°C until thermal equilibrium was reached. The battery was charged to 50% SOC at a discharge rate of 1/3 C and discharged at a current rate of 1 C for 30S. The battery voltage V2 and current I before discharge termination and the battery voltage V1 after the battery voltage was stable were recorded, and a direct current internal resistance DCR was calculated according to the formula DCR = (V2-V1)/I.

4. Cycle performance test

The battery was charged and discharged in a test environment of 25°C, constant current and constant voltage charging was performed at a current of 1/3 C to 4.5 V. The battery was left to stand for 10 minutes, and then discharged to 2.8 V at a constant current of 1 C. The final result was expressed as the corresponding number of cycles when the 0.33 C/1 C cycle charging and discharging capacity decays to 80%.
The test results of items 2-4 of the lithium ions prepared by the above Examples and Comparative Examples were shown in Table 1.

Table 1 Composition, preparation process and test results of positive electrode active materials

| No. | $Li_xCNi_aCo_bMn_c)_dM_{1-d}O_{2-y}A_y$ | Precursor Ni:Co:Mn | $Al_2O_3/WO_3$ doping amount (ppm) | Outer layer $Co(OH)_2$ (ppm) | Second sintering temperature (°C) | Second sintering time (h) | Coating layer | Air:Oxygen (v/v) | Gram capacity (mAh/g) | DCR (mOhm) | Number of cycles for 80% capacity retention |
|---|---|---|---|---|---|---|---|---|---|---|---|
| Example 1 | $Li(Ni_{0.55}Co_{0.06}Mn_{0.39})_{0.997}Al_{0.001}W_{0.002}O_2$ | 55:6:39 | 1000/2000 | 4000 | 700 | 6 | Yes | 4:1 | 198 | 30 | 2000 |
| Example 2 | $Li(Ni_{0.65}Co_{0.06}Mn_{0.29})_{0.997}Al_{0.001}W_{0.002}O_2$ | 65:6:29 | 1000/2000 | 4000 | 700 | 6 | Yes | 4:1 | 201 | 31 | 2000 |
| Example 3 | $Li(Ni_{0.55}Co_{0.12}Mn_{0.33})_{0.997}Al_{0.001}W_{0.002}O_2$ | 55:12:33 | 1000/2000 | 4000 | 700 | 6 | Yes | 4:1 | 200 | 20 | 2180 |
| Example 4 | $Li(Ni_{0.50}Co_{0.20}Mn_{0.30})_{0.997}Al_{0.001}W_{0.002}O_2$ | 50:20:30 | 1000/2000 | 4000 | 700 | 6 | Yes | 4:1 | 193 | 18 | 2100 |
| Example 5 | $Li(Ni_{0.55}Co_{0.06}Mn_{0.39})_{0.9987}Al_{0.0005}W_{0.0008}O_2$ | 55:6:39 | 500/800 | 4000 | 700 | 6 | Yes | 4:1 | 197 | 40 | 1550 |
| Example 6 | $Li(Ni_{0.55}Co_{0.06}Mn_{0.39})_{0.997}Al_{0.001}W_{0.002}O_2$ | 55:6:39 | 1200/1000 | 4000 | 700 | 6 | Yes | 4:1 | 198 | 33 | 1980 |
| Example 7 | $Li(Ni_{0.55}Co_{0.06}Mn_{0.39})_{0.997}Al_{0.001}W_{0.002}O_2$ | 55:6:39 | 1000/2000 | 2000 | 700 | 6 | Yes | 4:1 | 196 | 36 | 1900 |
| Example 8 | $Li(Ni_{0.55}Co_{0.06}Mn_{0.39})_{0.997}Al_{0.001}W_{0.002}O_2$ | 55:6:39 | 1000/2000 | 6000 | 700 | 6 | Yes | 4:1 | 198 | 28 | 1900 |
| Example 9 | $Li(Ni_{0.55}Co_{0.06}Mn_{0.39})_{0.997}Al_{0.001}W_{0.002}O_2$ | 55:6:39 | 1000/2000 | 7000 | 700 | 6 | Yes | 4:1 | 197 | 27 | 1920 |
| Example 10 | $Li(Ni_{0.55}Co_{0.06}Mn_{0.39})_{0.997}Al_{0.001}W_{0.002}O_2$ | 55:6:39 | 1000/2000 | 10000 | 700 | 6 | Yes | 4:1 | 198 | 25 | 1660 |
| Example 11 | $Li(Ni_{0.55}Co_{0.06}Mn_{0.39})_{0.997}Al_{0.001}W_{0.002}O_2$ | 55:6:39 | 1000/2000 | 1700 | 700 | 6 | Yes | 4:1 | 195 | 46 | 1700 |
| Example 12 | $Li(Ni_{0.55}Co_{0.06}Mn_{0.39})_{0.997}Al_{0.001}W_{0.002}O_2$ | 55:6:39 | 1000/2000 | 11000 | 700 | 6 | Yes | 4:1 | 197 | 30 | 1600 |
| Example 13 | $Li(Ni_{0.55}Co_{0.06}Mn_{0.39})_{0.997}Al_{0.001}W_{0.002}O_2$ | 55:6:39 | 1000/2000 | 4000 | 650 | 6 | Yes | 4:1 | 196 | 46 | 1880 |
| Example 14 | $Li(Ni_{0.55}Co_{0.06}Mn_{0.39})_{0.997}Al_{0.001}W_{0.002}O_2$ | 55:6:39 | 1000/2000 | 4000 | 800 | 6 | Yes | 4:1 | 197 | 39 | 1900 |
| Example 15 | $Li(Ni_{0.55}Co_{0.06}Mn_{0.39})_{0.997}Al_{0.001}W_{0.002}O_2$ | 55:6:39 | 1000/2000 | 4000 | 300 | 6 | Yes | 4:1 | 194 | 55 | 1780 |
| Example 16 | $Li(Ni_{0.55}Co_{0.06}Mn_{0.39})_{0.997}Al_{0.001}W_{0.002}O_2$ | 55:6:39 | 1000/2000 | 4000 | 900 | 6 | Yes | 4:1 | 196 | 46 | 1590 |
| Example 17 | $Li(Ni_{0.55}Co_{0.06}Mn_{0.39})_{0.997}Al_{0.001}W_{0.002}O_2$ | 55:6:39 | 1000/2000 | 4000 | 700 | 5 | Yes | 4:1 | 197 | 42 | 1930 |
| Example 18 | $Li(Ni_{0.55}Co_{0.06}Mn_{0.39})_{0.997}Al_{0.001}W_{0.002}O_2$ | 55:6:39 | 1000/2000 | 4000 | 700 | 7 | Yes | 4:1 | 197 | 33 | 1880 |
| Example 19 | $Li(Ni_{0.55}Co_{0.06}Mn_{0.39})_{0.997}Al_{0.001}W_{0.002}O_2$ | 55:6:39 | 1000/2000 | 4000 | 700 | 1 | Yes | 4:1 | 196 | 58 | 1710 |
| Example 20 | $Li(Ni_{0.55}Co_{0.06}Mn_{0.39})_{0.997}Al_{0.001}W_{0.002}O_2$ | 55:6:39 | 1000/2000 | 4000 | 700 | 12 | Yes | 4:1 | 193 | 58 | 1560 |
| Example 21 | $Li(Ni_{0.55}Co_{0.06}Mn_{0.39})_{0.997}Al_{0.001}W_{0.002}O_2$ | 55:6:39 | 1000/2000 | 4000 | 700 | 6 | None | 4:1 | 194 | 49 | 1480 |
| Example 22 | $Li(Ni_{0.65}Co_{0.06}Mn_{0.29})_{0.997}Al_{0.001}W_{0.002}O_2$ | 65:6:29 | 1000/2000 | 4000 | 700 | 6 | None | 4:1 | 200 | 38 | 1550 |
| Example 23 | $Li(Ni_{0.55}Co_{0.12}Mn_{0.33})_{0.997}Al_{0.001}W_{0.002}O_2$ | 55:12:33 | 1000/2000 | 4000 | 700 | 6 | None | 4:1 | 197 | 36 | 1580 |
| Example 24 | $Li(Ni_{0.55}Co_{0.06}Mn_{0.39})_{0.997}Al_{0.001}W_{0.002}O_2$ | 55:6:39 | 1000/2000 | 4000 | 700 | 6 | Yes | 7:3 | 198 | 26 | 2060 |

| No. | $Li_xCNi_aCo_bMn_c)_dM_{1-d}O_{2-y}A_y$ | Precursor Ni:Co:Mn | $Al_2O_3/WO_3$ doping amount (ppm) | Outer layer $Co(OH)_2$ (ppm) | Second sintering temperature (°C) | Second sintering time (h) | Coating layer | Air:Oxygen (v/v) | Gram capacity (mAh/g) | DCR (mOhm) | Number of cycles for 80% capacity retention |
|---|---|---|---|---|---|---|---|---|---|---|---|
| Example 25 | $Li(Ni_{0.55}Co_{0.06}Mn_{0.39})_{0.997}Al_{0.001}W_{0.002}O_2$ | 55:6:39 | 1000/2000 | 4000 | 700 | 6 | Yes | 0:1 | 198 | 29 | 2180 |
| Example 26 | $Li(Ni_{0.55}Co_{0.06}Mn_{0.39})_{0.997}Al_{0.001}W_{0.002}O_2$ | 55:6:39 | 1000/2000 | 4000 | 700 | 6 | Yes | 1:0 | 197 | 39 | 1890 |
| Comparative Example 1 | $Li(Ni_{0.55}Co_{0.06}Mn_{0.39})_{0.997}Al_{0.001}W_{0.002}O_2$ | 55:6:39 | 1000/2000 | / | / | / | Yes | 4:1 | 190 | 60 | 1500 |
| Comparative Example 2 | $Li(Ni_{0.55}Co_{0.06}Mn_{0.39})_{0.997}Al_{0.001}W_{0.002}O_2$ | 55:6:39 | 1000/2000 | / | / | / | None | 4:1 | 188 | 65 | 1200 |

It can be seen from Table 1 above that, compared with the positive electrode active materials of Comparative Example 1 (with a coating layer) and Comparative Example 2 (without a coating layer) that were not subjected to the second sintering, the positive electrode active materials in Examples 1-26 of the present disclosure, especially in Example 1, all achieved significant improvements in power performance (decrease in the direct current resistance DCR) and cycle performance of the secondary battery. In addition, gram capacities of the positive electrode active materials were also improved.

Specifically, in Examples 7-12, the positive electrode active materials obtained by adding different amounts of $Co(OH)_2$ during the second sintering all contributed to increasing gram capacity of the battery, reducing impedance, and improving cycle performance. Preferably, adding the cobalt-containing compound in an amount of 4000 ppm to 7000 ppm calculated as Co element can achieve the best balance of various performance. If the addition amount was too low, the improvement of the dynamic performance was limited, whereas if the addition amount was too high, the costs were increased, and too high an addition amount was prone to the phenomenon of material structure damage due to Co dissolution during the cycle, resulting in deterioration of material performance, which was not conducive to improving cycle performance.

Different second sintering temperatures were used in Examples 13-16. It can be seen from Examples 13-14 in combination with Example 1 that performing the second sintering at a temperature of approximately 650°C to 800°C helped to improve gram volume of the material and cycle performance of the secondary battery. If the second sintering temperature was too low, a sintering effect was poor, and the Co element was enriched in the surface layer of the material, and an ideal gradient cannot be formed, which was not conducive to the improvement of dynamics of the secondary battery, whereas if the sintering temperature was too high, the Co in the surface layer of the material diffused into the bulk phase, resulting in insufficient content of Co in the surface layer of the material, which was not conducive to the improvement of cycle performance.

Different second sintering times were used in Examples 17-20. It can be seen from Examples 17-18 in combination with Example 1 that a second sintering time of 6 h-7 h was more advantageous to improve power performance and cycle performance of the secondary battery simultaneously. If the second sintering time was too short, the Co element was not migrated enough and was enriched in the surface layer of the material, whereas if the second sintering time was too long, the content of Co in the surface layer of the material was insufficient. Therefore, in the two cases, dynamic performance of the secondary battery cannot be significantly improved.

In Examples 1-4, the proportions of Ni, Co, and Mn in the precursor were changed, and as the proportion of Co increased, the secondary battery can have a significantly reduced direct current impedance, indicating that the power performance of the secondary battery was significantly improved, and the cycle performance was also improved.

In Examples 5 and 6, the power performance and cycle performance of the secondary battery were both affected to a certain extent by reducing addition amounts of the doping elements Al and W compared with Example 1.

In addition, in Examples 24-26, the content of oxygen in the second sintering was adjusted, and the introduction of oxygen can reduce mixing of lithium and nickel in the material, which was helpful to obtain a more stable bulk phase structure and improved cycle performance. When the content of oxygen was increased (Examples 24 and 25), cycle performance of the secondary battery was significantly improved.

It should be noted that the present disclosure is not limited to the aforementioned implementations. The aforementioned implementations are merely examples, and any implementation having substantially the same configuration as the technical concept and exhibiting the same operation and effect within the scope of the claims of the present disclosure is included in the technical scope of the present disclosure. In addition, various modifications that can be conceived by those skilled in the art may be made to the implementations without departing from the subject matter of the present disclosure, and other implementations constructed by combining some of the constituent elements in the implementations are also included in the scope of the present disclosure.

## Claims

1. A positive electrode active material, comprising a particle containing lithium nickel cobalt manganese oxide, wherein in a range of a distance L extending from the surface of the particle to the interior of the particle along the radial direction of the particle, the mass concentration of Co gradually increases from the interior of the particle to the surface of the particle along the radial direction of the particle, wherein L = 1 $\mu$m.

2. The positive electrode active material according to claim 1, wherein L is 1.5 $\mu$m.

3. The positive electrode active material according to claim 1, wherein the mass concentration of Co on the surface of the particle is 1.02 times to 2 times, optionally 1.1 times to 1.8 times, of the mass concentration of Co at a distance L = 1 $\mu$m extending to the interior of the particle along the radial direction of the particle.

4. The positive electrode active material according to any one of claims 1 to 3, wherein the mass concentration of Ni gradually decreases from the interior of the particle to the surface of the particle along the radial direction of the particle.

5. The positive electrode active material according to any one of claims 1 to 4, wherein an absolute value of a difference between the mass concentrations of each of Li and Mn at any two points in the particle is less than or equal to 20%.

6. The positive electrode active material according to any one of claims 1 to 5, wherein the positive electrode active material is represented by Formula 1:

$$Li_x(Ni_aC_bMn_c)_dM_{1-d}O_{2-y}A_y \qquad \text{Formula 1,}$$

wherein
$0.95 \leq x \leq 1.3, 0.3 \leq a \leq 0.7, 0.01 \leq b \leq 0.15, 0.1 \leq c \leq 0.5, a + b + c = 1, 0.95 \leq d \leq 1, 0 \leq y < 0.1$, M comprises at least one selected from Zr, Sr, B, Ti, Mg, Sn, Tb, W, Nb, and Al, and A comprises at least one selected from S, N, F, Cl, Br, and I.

7. The positive electrode active material according to any one of claims 1 to 6, wherein the volume distribution particle size Dv50 of the particle is in a range of $3.5 \ \mu m \leq Dv50 \leq 7.5 \ \mu m$, optionally $4 \ \mu m \leq Dv50 \leq 7 \ \mu m$.

8. The positive electrode active material according to any one of claims 1 to 7, wherein the particle further has a coating layer, and optionally, the coating layer is an oxide or hydroxide of M', wherein M' comprises at least one selected from Mg, Al, Ca, Ba, Ti, Zr, Zn, Nb, Sb, Ce, La, W, and B.

9. The positive electrode active material according to claim 8, wherein the thickness of the coating layer is $0.001 \ \mu m$ to $0.5 \ \mu m$, optionally $0.01 \ \mu m$ to $0.1 \ \mu m$.

10. A preparation method for the positive electrode active material according to any one of claims 1 to 9, comprising:

    mixing a lithium source, a precursor of Ni, Co, and Mn, and optionally a compound containing a doping element M and a compound containing a doping element A, and performing first sintering, to obtain an initial material particle; and
    mixing the initial material particle with a cobalt-containing compound, and performing second sintering, to obtain a particle containing lithium nickel cobalt manganese oxide.

11. The preparation method according to claim 10, wherein the lithium source is selected from one or a plurality of lithium oxide, lithium phosphate, lithium dihydrogen phosphate, lithium acetate, lithium hydroxide, lithium carbonate, or lithium nitrate, and optionally, the lithium source is one or a plurality of lithium carbonate, lithium hydroxide, or lithium nitrate.

12. The preparation method according to claim 10 or 11, wherein the precursor is selected from one or a plurality of an oxide, a hydroxide, or a carbonate that contains Ni, Co, and Mn, and optionally, the precursor is a hydroxide containing Ni, Co, and Mn.

13. The preparation method according to any one of claims 10 to 12, wherein the ratio of the mass of the cobalt-containing compound calculated as cobalt element to the mass of the particle containing the lithium nickel cobalt manganese oxide is in a range of 2000 ppm to 10000 ppm, optionally 4000 ppm to 7000 ppm.

14. The preparation method according to any one of claims 10 to 13, wherein the molar ratio of Ni:Co:Mn in the precursor is in a range of (50-70):(6-25):(29-40), optionally (55-65):(6-12):(29-33).

15. The preparation method according to any one of claims 10 to 14, wherein the temperature of the first sintering is kept for 5 h to 25 h at 600°C to 1000°C, optionally for 8 h to 20 h at 650°C to 950°C.

16. The preparation method according to any one of claims 10 to 15, wherein the second sintering is performed in an oxygen-rich atmosphere, and optionally the volume ratio of air to oxygen in the oxygen-rich atmosphere is between (0:10) and (8:2).

17. The preparation method according to any one of claims 10 to 16, wherein the temperature of the second sintering is kept for 5 h to 7 h at 650°C to 800°C.

18. The preparation method according to any one of claims 10 to 17, further comprising:
mixing the particle containing the lithium nickel cobalt manganese oxide with an M' source, and performing third sintering, to form a coating layer on the surface of the particle, wherein optionally, M' comprises at least one selected from Mg, Al, Ca, Ba, Ti, Zr, Zn, Nb, Sb, Ce, La, W, and B.

19. A secondary battery, comprising a positive electrode sheet, wherein the positive electrode sheet comprises at least the positive electrode active material according to any one of claims 1 to 9, or the positive electrode sheet comprises at least the positive electrode active material prepared in the preparation method according to any one of claims 10 to 18.

20. An electric device, comprising the secondary battery according to claim 19.

FIG. 1

FIG. 2

FIG. 3

FIG. 4

FIG. 5

1

FIG. 6

1

2

4

4

4

4

4

4

3

FIG. 7

FIG. 8

## INTERNATIONAL SEARCH REPORT

| International application No. |
| --- |
| **PCT/CN2024/118013** |

| A. | CLASSIFICATION OF SUBJECT MATTER |
| --- | --- |

H01M4/525(2010.01)i

According to International Patent Classification (IPC) or to both national classification and IPC

| B. | FIELDS SEARCHED |
| --- | --- |

Minimum documentation searched (classification system followed by classification symbols)

IPC:H01M4

Documentation searched other than minimum documentation to the extent that such documents are included in the fields searched

Electronic data base consulted during the international search (name of data base and, where practicable, search terms used)

CNTXT, CNABS, VEN, CNKI: 正极, 活性材料, 浓度, 梯度, 钴, 锂镍钴锰氧化物, 电池, anode, positive pole, cell, electric cell, active material, concentration, cobalt, oxide

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| X | CN 114930574 A (SM RESEARCH INSTITUTE, INC.) 19 August 2022 (2022-08-19) description, paragraphs 0040-0146, 0151, and 0182 | | 1-20 |
| X | CN 114846652 A (SM RESEARCH INSTITUTE, INC.) 02 August 2022 (2022-08-02) entire document | | 1-20 |
| X | CN 115152052 A (SM RESEARCH INSTITUTE, INC.) 04 October 2022 (2022-10-04) entire document | | 1-20 |
| A | CN 110620216 A (SK INNOVATION CO., LTD.) 27 December 2019 (2019-12-27) entire document | | 1-20 |
| A | CN 111615496 A (UMICORE NV et al.) 01 September 2020 (2020-09-01) entire document | | 1-20 |
| A | CN 112447951 A (CONTEMPORARY AMPEREX TECHNOLOGY CO., LTD.) 05 March 2021 (2021-03-05) entire document | | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 November 2024** | **25 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/118013**

| Patent document cited in search report | | | Publication date (day/month/year) | Patent family member(s) | | | Publication date (day/month/year) |
|---|---|---|---|---|---|---|---|
| CN | 114930574 | A | 19 August 2022 | EP | 4084134 | A1 | 02 November 2022 |
| | | | | EP | 4084134 | A4 | 24 January 2024 |
| | | | | WO | 2021132761 | A1 | 01 July 2021 |
| | | | | JP | 2023523667 | A | 07 June 2023 |
| | | | | JP | 7503863 | B2 | 21 June 2024 |
| | | | | KR | 102144056 | B1 | 12 August 2020 |
| | | | | US | 2022411284 | A1 | 29 December 2022 |
| CN | 114846652 | A | 02 August 2022 | EP | 4084144 | A1 | 02 November 2022 |
| | | | | EP | 4084144 | A4 | 13 March 2024 |
| | | | | WO | 2021132763 | A1 | 01 July 2021 |
| | | | | US | 2022416240 | A1 | 29 December 2022 |
| | | | | JP | 2023509595 | A | 09 March 2023 |
| | | | | KR | 102178781 | B1 | 13 November 2020 |
| CN | 115152052 | A | 04 October 2022 | US | 2022407064 | A1 | 22 December 2022 |
| | | | | WO | 2021132762 | A1 | 01 July 2021 |
| | | | | KR | 102144057 | B1 | 12 August 2020 |
| | | | | EP | 4084135 | A1 | 02 November 2022 |
| | | | | EP | 4084135 | A4 | 24 January 2024 |
| | | | | JP | 2023523668 | A | 07 June 2023 |
| CN | 110620216 | A | 27 December 2019 | KR | 20230087425 | A | 16 June 2023 |
| | | | | KR | 102583699 | B1 | 26 September 2023 |
| | | | | KR | 20230009522 | A | 17 January 2023 |
| | | | | KR | 102543109 | B1 | 13 June 2023 |
| | | | | US | 2019393479 | A1 | 26 December 2019 |
| | | | | US | 11271194 | B2 | 08 March 2022 |
| | | | | KR | 20190143088 | A | 30 December 2019 |
| | | | | KR | 102485994 | B1 | 05 January 2023 |
| CN | 111615496 | A | 01 September 2020 | WO | 2019120973 | A1 | 27 June 2019 |
| | | | | KR | 20200106043 | A | 10 September 2020 |
| | | | | KR | 102425325 | B1 | 26 July 2022 |
| | | | | JP | 2021508410 | A | 04 March 2021 |
| | | | | JP | 7052072 | B2 | 11 April 2022 |
| | | | | US | 2021119204 | A1 | 22 April 2021 |
| | | | | US | 11522187 | B2 | 06 December 2022 |
| | | | | PL | 3728129 | T3 | 17 January 2022 |
| | | | | EP | 3728129 | A1 | 28 October 2020 |
| | | | | EP | 3728129 | B1 | 13 October 2021 |
| | | | | HUE | 056745 | T2 | 28 March 2022 |
| CN | 112447951 | A | 05 March 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311460557